(19) Europäisches Patentamt

European Patent Office

Office européen des brevets

(11) Veröffentlichungsnummer: **0 306 771 B1**

(12) **EUROPÄISCHE PATENTSCHRIFT**

(45) Veröffentlichungstag der Patentschrift: **08.07.92**

(21) Anmeldenummer: **88113742.6**

(22) Anmeldetag: **24.08.88**

(51) Int. Cl.5: **B61B 12/02**, B61B 7/02

(54) **Gleiseinrichtung für die Fahrzeuge einer Förderanlage, insbesondere Umlauf-Seilförderanlage.**

(30) Priorität: **09.09.87 CH 3488/87**

(43) Veröffentlichungstag der Anmeldung:
**15.03.89 Patentblatt 89/11**

(45) Bekanntmachung des Hinweises auf die
Patenterteilung:
**08.07.92 Patentblatt 92/28**

(84) Benannte Vertragsstaaten:
**AT CH DE FR GB IT LI SE**

(56) Entgegenhaltungen:
**EP-A- 0 018 932**
**EP-A- 0 245 163**
**AT-A- 366 328**
**FR-A- 2 327 899**
**FR-A- 2 593 759**

(73) Patentinhaber: **Von Roll Transportsysteme AG**
**Industriestrasse 2**
**CH-3601 Thun(CH)**

(72) Erfinder: **Feuz, Fritz**
**Rütlistrasse 5**
**CH-3600 Thun(CH)**
Erfinder: **Hora, Ferdinand**
**Thunstrasse 4**
**CH-3400 Burgdorf(CH)**
Erfinder: **Linder, Fritz**
**Mittelweg 2**
**CH-3627 Heimberg(CH)**

(74) Vertreter: **Patentanwälte Schaad, Balass &**
**Partner**
**Dufourstrasse 101 Postfach**
**CH-8034 Zürich(CH)**

**Beschreibung**

Die Erfindung betrifft eine Gleiseinrichtung für die Fahrzeuge einer Förderanlage nach dem Oberbegriff von Anspruch 1.

Bei als Umlauf-Gondelbahnen ausgebildeten Seilförderanlagen ist es bekannt, die Anzahl der im Umlauf befindlichen Fahrzeuge dem momentanen Bedarf an Transportleistung anzupassen, um Antriebsenergie einzusparen und die Abnützung der Anlage zu vermindern. Hierzu werden die momentan nicht benötigten Fahrzeuge auf Abstellgleisen parkiert, die mindestens einer der Stationen der Anlage zugeordnet und über Weichen mit deren Stationsgleis verbunden sind. Die Abstellgleise verlaufen meist innerhalb des Stationsgebäudes oder eines Abstelltraktes, um die Fahrzeuge vor den Einwirkungen der Witterung zu schützen. Im Bezug auf den Gleisverlauf sind Einrichtungen bekannt, bei denen das eine Ende des mehrere zusammenhängende Schleifen bildenden Abstellgleises mit der Ausstiegsseite und das andere Ende mit der Einstiegsseite des Stationsgleises verbunden ist. Auf dem Abstellgleis werden die Fahrzeuge hierbei manuell verschoben.

Inzwischen ist eine Einrichtung der im Oberbegriff von Anspruch 1 angegebenen Art bekannt geworden. Im Längsprofil betrachtet weist das Abstellgleis mehrere sich folgende ansteigende und abfallende Abschnitte auf. Jedem der ansteigenden Abschnitte ist ein Kettenförderer zugeordnet, der die Fahrzeuge am Ende des abfallenden Abschnittes übernimmt und diese bis zum Anfang des nachfolgenden abfallenden Abschnittes transportiert. Die Neigung des abfallenden Abschnittes ist so gewählt, dass die Fahrzeuge diese unter ihrem Eigengewicht durchfahren könnten. Allerdings zeigt die Praxis, dass die unvermeidlichen Unterschiede in der Rollreibung der einzelnen Fahrwerke, zu welchen auch Witterungseinflüsse beitragen können, zu einem unterschiedlichen Ablaufverhalten derselben führen. Die Folgen sind Störungen im Betrieb, die durch das Bedienungspersonal behoben werden müssen, sowie unter Umständen sogar Beschädigungen an aufeinander auflaufenden oder sich verkeilenden Gondeln. Ein grundsätzlicher Nachteil dieser Einrichtung liegt zudem darin, dass die Baukosten erheblich vergrössert werden. Bei der Bemessung der lichten Höhe des die Einrichtung aufnehmenden Baukörpers addiert sich zur Fahrzeughöhe die Überhöhung des Abstellgleises zwischen tiefstem und höchstem Punkt des Längsprofiles. Diese Höhenzunahme wirkt sich auf die Kubatur des entsprechenden Baukörpers stark aus, da eine solche Einrichtung auch bei optimaler Auslegung eine erhebliche Grundfläche in Anspruch nimmt.

Aufgabe der Erfindung ist es, eine Einrichtung zu schaffen, welche die vorgenannten Nachteile vermeidet.

Die Lösung dieser Aufgabe gelingt mit den Merkmalen des Kennzeichens von Anspruch 1.

Der horizontale Verlauf des Gleisstranges gestattet, die lichte Höhe des Baukörpers auf die zur Aufnahme der Fahrzeuge notwendige Höhe zu beschränken. Zudem werden mit der erfindungsgemässen Lösung auf dem Gleisstrang nicht nur definierte Haltestellen für die Fahrzeuge geschaffen, in welchen diese selbsttätig abgestellt werden, sondern die auf dem Gleisstrang verbleibenden Fahrzeuge werden automatisch anderen Haltestellen zugewiesen, wenn eines oder mehrere derselben dem Gleisstrang entnommen werden. Damit wird erreicht, dass die auf dem Gleisstrang sich befindenden Fahrzeuge immer jene Haltestellen aufsuchen und belegen, die der Auslaufseite desselben am nächsten benachbart sind. Da der Gleisstrang in aller Regel gerade und gekrümmte Abschnitte umfasst, ist es durch die Abstimmung der Abstände der die Haltestellen definierenden Anschläge möglich, die Fahrzeuge in minimalsten Abständen voneinander abzustellen und mithin die Länge des Gleisstranges maximal auszunutzen.

Aus der FR-A-2593759 ist eine Transportvorrichtung der im Oberbegriff von Anspruch 1 genannten Art ebenfalls bekannt. Dabei sind zweiarmige Mitnehmer des Förderers zwischen einer Mitnahmelage und einer Blockierlage schwenkbar mit diesem verbunden und durch eine Feder in der Mitnahmelage gehalten. Fahrzeuge, deren Geschwindigkeit grösser ist als jene des Förderers, können die Mitnehmer unter Verschwenkung aus der Mitnahmelage überfahren. Jedes Fahrzeug weist ein individuell und wahlweise betätigbares Blockierelement auf, das in seiner wirksamen Lage eine Verschwenkung des Mitnehmers in die Blockierlage herbeiführt, wenn sich das Fahrzeug relativ zum Förderer vorwärts bewegt. In der Blockierlage greift der zweite Arm des Mitnehmers in den Weg eines solchen Fahrzeuges ein und verhindert dessen weiteren Vorlauf relativ zum Förderer. Dem Gleisstrang sind hier keine ortsfesten Anschläge und Fahrzeugfühler zugeordnet und es fehlen mithin definierte Haltestellen.

Eine beispielsweise Ausführungsform der Erfindung ist nachfolgend unter Bezugnahme auf die Zeichnung näher erläutert. Es zeigen:

Fig. 1 die Gleiseinrichtung im Grundriss im Zusammenhang mit einer Station der als Gondelbahn ausgebildeten Umlaufseilförderanlage;

Fig. 2 Im Aufriss einen Ausschnitt des Gleisstranges der Einrichtung nach Fig. 1;

Fig. 3 Den Ausschnitt nach Fig. 2 in einem anderen Betriebszustand; und

Fig. 4 Den Gleisstrang im Querschnitt.

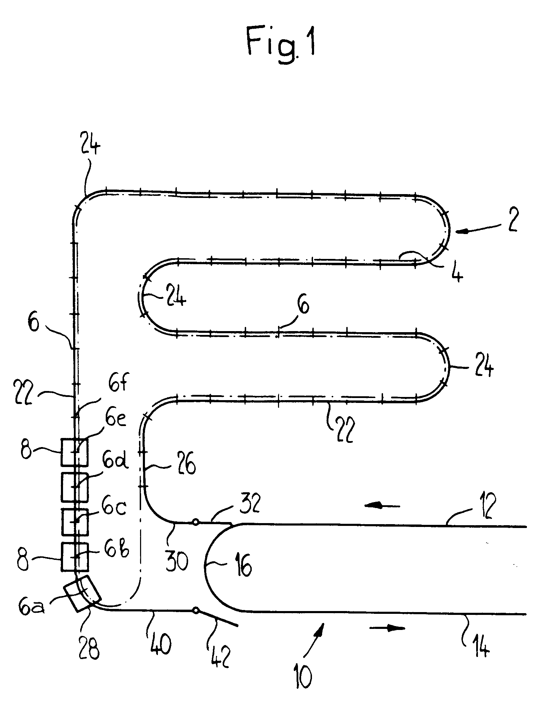

Mit 2 ist in Fig.1 ein Gleisstrang bezeichnet, der mehrere aus geraden Abschnitten 22 und diese verbindenden Bogenstücken 24 gebildete Schleifen 25 aufweist. Der Gleisstrang 2 weist eine Einlaufseite 26 und eine Auslaufseite 28 auf, wobei beide Seiten einem allgemein mit 10 bezeichneten Stationsgleis der Gondelbahn benachbart enden. Dabei ist zwischen einer Ausstiegsstrecke 12 des Stationsgleises 10 und der Einlaufseite 26 des Gleisstranges ein Verbindungsgleis 30 sowie eine Weiche 32 vorgesehen. Ein weiteres Verbindungsgleis 40 mit einer Weiche 42 ist zwischen der Auslaufseite 28 des Gleisstranges 2 und einer Einstiegsstrecke 14, die mit der Ausstiegsstrecke 12 durch einen Bogenabschnitt 16 verbunden ist, angeordnet. Entlang dem Gleisstrang 2 verläuft über dessen volle Erstreckung ein in Fig. 1 nur schematisch angedeuteter, als Kettenförderer ausgebildeter Förderer 4 auf einer geschlossenen Bahn, der mit nicht dargestellten Antriebsmitteln, beispielsweise dem Seilantrieb der Gondelbahn,in Verbindung steht. Auf den Kettenförderer 4 wird weiter unten noch näher eingegangen.

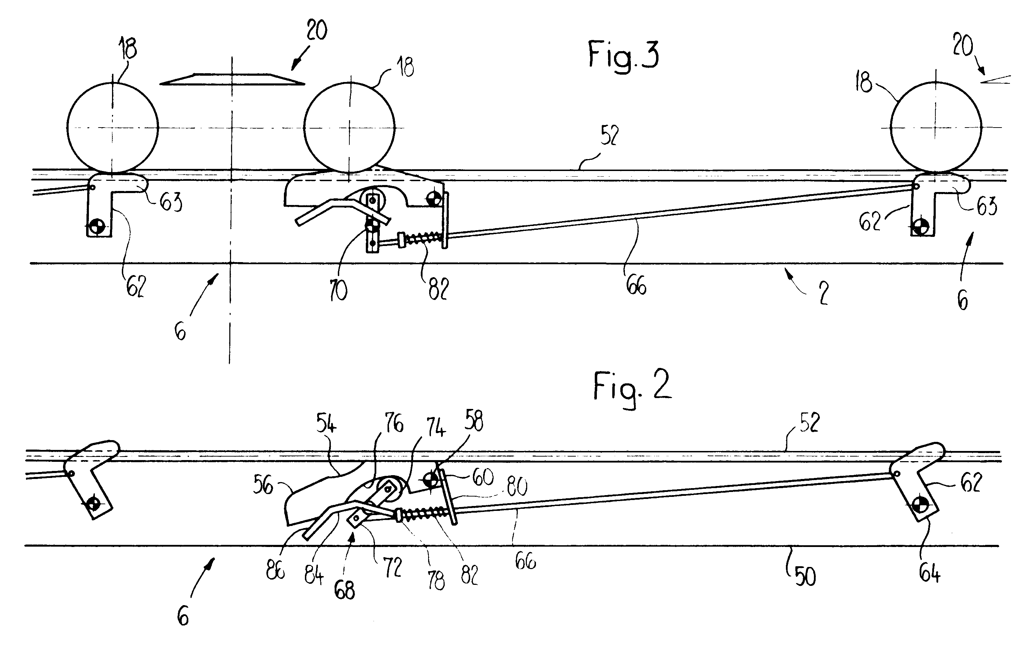

Über die Erstreckung des Gleisstranges 2 verteilt sind Haltestellen 6 angeordnet, deren Ausgestaltung in den Fig. 2 bis 4 dargestellt ist. Um dabei die Länge des Gleisstranges 2 maximal auszunutzen, sind die Abstände der Haltestellen 6 auf den geraden Abschnitten 22 kleiner als jene auf den Bogenstücken 24, wo die Fahrzeuge durch ihre Breite einen grösseren Abstand benötigen. Rein schematisch sind in Fig. 1 diese Haltestellen sowie mehrere Fahrzeuge 8 angedeutet, die sich an Haltestellen 6a-6e des Gleisstranges 2 in Ruhe befinden.

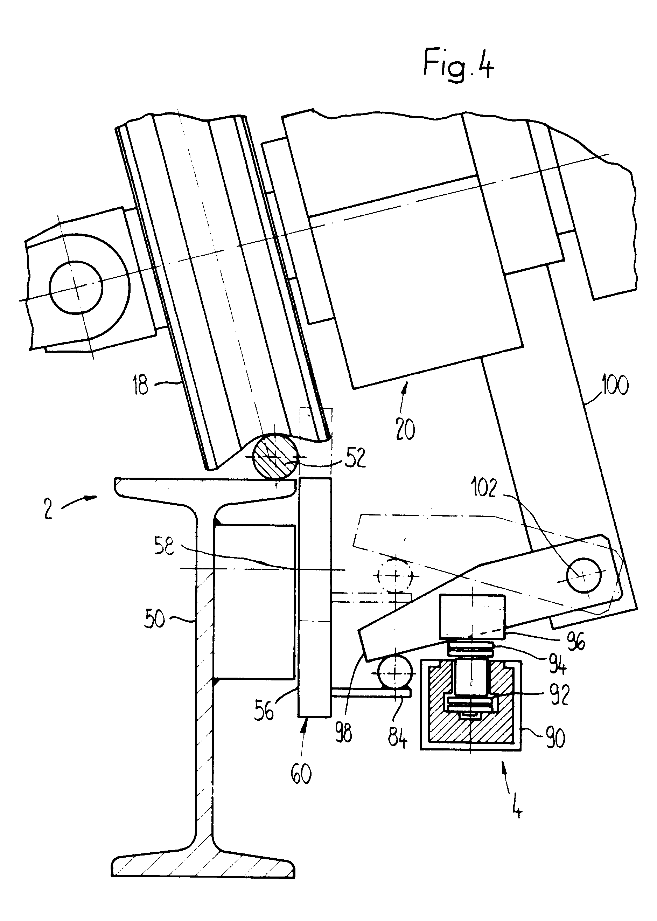

Wie aus Fig. 4 ersichtlich ist, weist der Gleisstrang 2 eine auf einem T-förmigen Träger 50 angebrachte und durch einen Rundstab gebildete Schiene 52 auf, die die Fahrwerke 20 der Fahrzeuge 8 über deren Laufräder 18 abstützt. Am T-förmigen Träger 50 sind in einem dem Abstand der Haltestellen 6 entsprechenden Abstand Anschläge 54 vorgesehen, die mit dem jeweils vordersten Laufrad 18 eines Fahrwerkes 20 zusammenwirken. Die Anschläge 54 sind als Vertiefungen an einem Arm 56 eines bei 58 schwenkbar am Träger 50 befestigten zweiarmigen Hebels 60 (nachfolgend als Anschlaghebel bezeichnet) ausgebildet. Jeder der Haltestellen 6 des Gleisstranges 2 ist überdies ein Fahrzeugfühler 62 zugeordnet, der vom Anschlag der entsprechenden Haltestelle 6 etwa um den Achsabstand der Laufräder 18 entgegen der Fahrrichtung entfernt ist. Der Fahrzeugfühler 62 ist durch einen einarmigen Hebel gebildet, der einen abgewinkelten Endteil 63 besitzt und bei 64 am Träger 50 schwenkbar gelagert ist. Ein Lenker 66 verbindet den Fahrzeugfühler 62 einer Haltestelle 6 mit einem allgemein mit 68 bezeichneten Betätigungsglied der entgegen der Fahrrichtung benachbarten Haltestelle. Das Betätigungsglied 68 umfasst einen bei 70 am Träger 50 schwenkbar gelagerten zweiarmigen Hebel 72, an dessen einem Arm der Lenker 66 angreift und dessen anderer Arm eine Rolle 74 trägt. Die Rolle 74 steht mit einer konkav geformten Leitfläche 76 am Arm 56 des Anschlaghebels 60 im Eingriff. Der Lenker 66 trägt zwischen einem Stellring 78 und dem zweiten Arm 80 des Anschlaghebels 60 eine Druckfeder 82, die den Anschlag 54 normalerweise in einer in Fig. 2 dargestellten unwirksamen Lage hält.Gleichfalls wird durch die Druckfeder 82 der Fahrzeugfühler 62 in einer in das Profil der Laufräder 18 ragende Lage gehalten, welche die entsprechende Haltestelle 6 als unbelegt anzeigt.

Befindet sich an einer Haltestelle 6 ein in Fig. 3 durch dessen Fahrwerte 20 angedeutetes Fahrzeug 8, so hält dessen hinteres Laufrad 18 den Fahrzeugfühler 62 dieser Haltestelle in der in Fig. 3 gezeigten Lage. Ebenso wird an der davorliegenden Haltestelle 6 über den Lenker 66 entgegen der Wirkung der gespannten Druckfeder 82 der Hebel 72 mit der Rolle 74 in einer aufgerichteten, im Gegenuhrzeigersinn verschwenkten Lage gehalten, in welcher der Anschlaghebel 60 im Uhrzeigersinn verschwenkt ist und der Anschlag 54 das vordere Laufrad 18 des sich an dieser Haltestellt 6 befindlichen Fahrzeuges 8 blockiert.

In Fig. 4 ist der Kettenförderer 4 dargestellt, der wie schon weiter vorne erwähnt, dem Gleisstrang 2 entlang verläuft. Der Kettenförderer 4 umfasst eine in einer Führung 90 angeordnete Gliederkette 92, die an ihrer Oberseite 34 vorstehende, in regelmässigen Abständen angebrachte Mitnehmernocken 96 trägt. Mit diesen Mitnehmernocken 96 sind im Fahrbetrieb der Fahrzeuge 8 auf dem Gleisstrang 2 die Mitnahmeklinken 98 in Eingriff, die je an einem Ausleger 100 der Fahrwerke 20 um eine horizontale Achse 102 schwenkbar befestigt sind. Der Abstand der Mitnehmernocken voneinander ist grundsätzlich frei wählbar, jedoch ist es zweckmässig, diesen grösser zu halten als den in den Bogenstücken 24 minimal zulässigen Abstand zwischen benachbarten Haltestellen bzw. Anschlägen.

Aus den Fig. 2,3 und 4 ist ersichtlich, dass jede Haltestelle mit einem Unterbrecher 84 ausgerüstet ist, der jeweils am Arm 56 des Anschlaghebels 60 befestigt ist. In der in Fig. 2 und 4 dargestellten unwirksamen Lage des Anschlages 54 befindet sich der Unterbrecher 84 in einer abgesenkten Stellung (in Fig. 4 mit ausgezogenen Linien dargestellt). Dementsprechend bewegt sich die Mitnahmeklinke 98 eines Fahrzeuges 8 auf der Oberseite 94 der Gliederkette 92 aufliegend über den Unterbrecher 84 hinweg und bleibt mit dem Mitnehmernocken 96 im ungestörten Eingriff. Wird der Anschlag 54 jedoch in seine wirksame Lage angehoben (Fig. 3), so wird der Unterbrecher in die in Fig. 4 strichpunktiert dargestellte Stellung verbracht. Die Mitnahmeklinke 98 eines vom Kettenförderer 4 bewegten Fahrzeuges 8 läuft dabei auf eine am Unterbrecher 84 vorgesehene Auflauffläche 86 auf und wird nun ausser Eingriff mit dem Mitnehmernocken 96 verschwenkt. Auf dieses Fahrzeug 8 wird demtentsprechend nicht mehr fördernd eingewirkt und dasselbe kommt am entsprechenden Anschlag 54 zum Stillstand. Dabei wird durch die Ausgestaltung des Anschlages 54 als Vertiefung das auflaufende Laufrad 18 gefangen und der Anschlag 54 verhindert mithin eine Rückwärtsbewegung des Fahrzeuges 8 ebenfalls. Auch ist hierdurch Gewähr geboten, dass der dieser Haltestelle 6 zugeordnete Fahrzeugfühler 62 die die Anwesenheit eines Fahrzeuges 8 repräsentierende Stellung gemäss Fig. 3 einnimmt und beibehält. Gegenüber der in Fig.2 dargestellten Lage wurde der Fahrzeugfühler 62 durch das ankommende Laufrad im Uhrzeigersinn verschwenkt, wobei nun der abgewinkelte Endteil 63 desselben am Laufrad anliegt. Wird eine Haltestelle 6 von einem Fahrzeug 8 nach Freigabe durch den entsprechenden Anschlag 54 verlassen, so wird der Fahrzeugfühler 62 derselben zwar vom hinteren Laufrad 18 freigegeben, jedoch stellt die Druckfeder 82 sicher, dass der Fahrzeugfühler in die in Fig. 2 gezeigte Lage zurückkehrt und das Betätigungsglied 68 der vorangehenden Haltestelle 6 den zugeordneten Anschlag 54 in die unwirksame Lage zurückkehren lässt. Die Druckfeder 82 wirkt mithin als Rückstellglied für den Fahrzeugfühler und den Anschlag.

Für die Erläuterung der Wirkungsweise der Gleiseinrichtung sei angenommen, dass aus dem Umlauf der Bahn ein Fahrzeug 8 ausgeschleust werden soll. Von der Ausstiegsstrecke 12 wird dieses Fahrzeug 8 demnach über die Weiche 32 und das anschliessende Verbindungsgleis 30 von Hand zur Einlaufseite 26 des Gleisstranges 2 verbracht. Das Fahrzeug 8 gelangt mithin in den Wirkbereich des Kettenförderers 4 und wird über seine Mitnahmeklinke 98 von einem der Mitnehmernocken 96 desselben mitgenommen und von den Anschlägen 54 der freien Haltestellen 6 unbehindert dem Gleisstrang 2 entlang gefördert. Da gemäss Fig. 1 die Haltestelle 6e belegt ist und deren Fahrzeugfühler 62 über den Lenker 66 den Anschlag 54 der Haltestelle 6f in die in Fig. 3 dargestellte Lage angehoben hat, wird das an dieser ankommende Fahrzeug 8 wie vorstehend beschrieben zum Stillstand gebracht.

Der beschriebene Vorgang wiederholt sich selbsttätig an weiteren unbelegten Haltestellen, wenn weitere Fahrzeuge 8 in aus der Umlaufstrecke in die Gleiseinrichtung eingeschleust werden und damit in den Wirkbereich des Kettenförderers 4 gelangen.

Sollen Fahrzeuge, die auf dem Gleisstrang 2 abgestellt sind, in die Umlaufstrecke der Bahn überführt werden, so kann durch nicht dargestellte, beispielsweise von Hand betätigbare Mittel der der Haltestelle 6a zugeordnete Anschlag 54 unwirksam gemacht werden. Solche Mittel können anstelle des hier nicht benötigten Fahrzeugfühlers vorgesehen sein. Wird anschliessend das an dieser Haltestelle 6a befindliche Fahrzeug 8 auf das Verbindungsgleis 40 verfahren, so nimmt deren Fahrzeugfühler 62 die in Fig. 2 dargestellte Lage ein. Der Anschlag 54 der unmittelbar davorliegenden Haltestelle 6b wird damit unwirksam und gibt das Laufrad 18 des entsprechenden Fahrzeuges 8 frei. Gleichzeitig kann durch die Verschwenkung des Unterbrechers 84 zusammen mit dem Anschlaghebel 60 im Gegenuhrzeigersinn die Mitnahmeklinke 98 an der Oberseite 94 der Gliederkette 92 zur Auflage gelangen und durch einen Mitnehmernokken 96 erfasst werden. Während das entsprechende Fahrzeug 8 dadurch zur Haltestelle 6a transportiert und dort in beschriebener Weise zum Stillstand gebracht wird, kann sich der Fahrzeugfühler 62 der Haltestelle 6b in die Lage nach Fig. 2 verschwenken und meldet hierdurch den unbelegten Zustand derselben an die davorliegende Haltestelle 6c. An der Haltestelle 6c verschwenkt sich dementsprechend der Anschlaghebel 60 ebenfalls und ein dort befindliches Fahrzeug 8 wird freigegeben und kann um eine Haltestelle näher zur Auslaufseite aufrücken. Der beschriebene Vorgang wiederholt sich offensichtlich in entsprechender zeitlicher Folge an allen weiter zurückliegenden Haltestellen, die mit Fahrzeugen 8 belegt sind.

Anstelle einer Ueberführung der Fahrzeuge von Hand von der Ausstiegsstrecke 12 zur Einlaufseite 26 bzw. von der Auslaufseite 28 zur Ausstiegsstrecke 14 könnte diese Aufgabe auch durch Fördermittel übernommen werden, die motorisch betrieben sind. Diese Fördermittel, beispielsweise Pneuräder, können mit gleicher Geschwindigkeit angetrieben sein wie jene, welche die Fahrzeuge auf der Austiegs-und der Einstiegsstrecke 12 bzw. 14 bewegen. Auch die Weichen 32 und 42 können mit einem motorischen Antrieb versehen und automatisch betätigt werden.

Es ist weiterhin möglich, die Abgabe von Fahrzeugen vom Gleisstrang 2 an die Umlaufstrecke nicht nur zu automatisieren, sondern diese auch in einer vorgegebenen zeitlichen Folge ablaufen zu lassen. Beispielsweise kann diese zeitliche Folge der ursprünglichen Taktfolge der im Umlauf befindlichen Fahrzeuge angepasst sein. So kann die Abgabe von sich folgenden Fahrzeugen in einem zeitlichen Abstand geschehen, welcher der ursprünglichen Taktzeit der der Fahrzeuge auf der Umlaufstrecke gleich ist. Dabei kann das Einschleusen von weiteren Fahrzeugen in die Umlaufstrecke beispielsweise so auf die umlaufenden Fahrzeuge abgestimmt werden, dass sich die ursprüngliche Taktzeit genau halbiert. Um den Eintritt der weiteren Fahrzeuge zu einem genau abgestimmten Zeitpunkt erfolgen zu lassen, kann im Fall eines Mitnehmer aufweisenden Förderers eine Ausgangslage dieser Mitnehmer vorbestimmt und aufgesucht werden. Das Aufsuchen der vorbestimmten Ausgangslage der Mitnehmer kann entweder bei jeder Stillsetzung des Förderers oder vor jeweils der ersten Freigabe eines Fahrzeuges von der letzten Haltestelle des Gleisstranges durchgeführt werden. Wird der Antrieb des Förderers vom Antrieb der Seilförderanlage abgeleitet, so kann die für das Stillsetzen des Förderers ohnehin benötigte Kupplung für das Aufsuchen der vorbestimmten Ausgangslage der Mitnehmer verwendet werden. Nachzutragen bleibt, dass der Förderer zweckmässigerweise immer dann stillgesetzt wird, wenn die Anzahl der im Umlauf befindlichen Fahrzeuge jedenfalls momentan konstant gehalten wird.

Zweckmässigerweise ist eine erfindungsgemässe Gleiseinrichtung an beiden Stationen einer Umlaufstrecke bzw. an den Endstationen einer mehrere Sektionen aufweisenden Seilförderanlage vorgesehen. Die erfindungsgemässe Gleiseinrichtung kann jedoch auch als Staustrecke zwischen Umlaufstrecken eingebaut werden, die Sektionen einer gemeinsamen Anlage bilden. Dabei ist es sogar denkbar, die Einlaufseite und die Auslaufseite wahlweise mit beiden Umlaufstrecken verbindbar auszugestalten, um sowohl das Einschleusen aus beiden Umlaufstrecken wie auch das Ausschleusen in beide derselben zu ermöglichen.

**Patentansprüche**

1. Gleiseinrichtung für die Fahrzeuge einer Förderanlage, insbesondere Umlauf-Seilförderanlage, mit einem die Fahrzeuge (8) an deren Fahrwerk (20) abstützenden, eine Einlaufseite (26) und eine Auslaufseite (28) aufweisenden Gleisstrang (2) sowie einem dem Gleisstrang zugeordneten Förderer (4), der zur Mitnahme jeweils eines Fahrzeuges in Fahrrichtung bestimmte Mitnehmer (96) aufweist, dadurch gekennzeichnet, dass dem durchwegs horizontal verlaufenden Gleisstrang der Förderer über die volle Länge entlang verläuft und am Gleisstrang verteilt Anschläge (54) für je ein Fahrzeug vorgesehen sind, die zwischen einer wirksamen, Haltestellen (6) definierenden, und einer unwirksamen Lage beweglich sind, wobei jeder der Anschläge ein Betätigungsglied (68) besitzt, dass für jede Haltestelle ein Fahrzeugfühler (62) sowie ein Unterbrecher (84) vorgesehen ist, wobei jeweils der Fahrzeugfühler einer Haltestelle in bezug auf eine in Fahrrichtung vorangehende Haltestelle sowohl mit dem Betätigungsglied als auch mit deren Unterbrecher verbunden ist und dass der Unterbrecher ausgebildet ist, auf die Mitnahmeverbindung zwischen einem Mitnehmer (96) des Förderers und einem Fahrzeug einzuwirken.

2. Gleiseinrichtung nach Anspruch 1, dadurch gekennzeichnet, dass jeder Fahrzeugfühler (62) durch einen am Gleisstrang (2) schwenkbar befestigten Hebel (64) gebildet ist, der über einen Lenker (66) mit dem Betätigungsglied (68) des Anschlags (54) der in Förderrichtung vorangehenden Haltestelle (6) verbunden ist und dass der Fahrzeugfühler, der Anschlag und der Unterbrecher (84) unter der Wirkung eines Rückstellgliedes (82) stehen.

3. Gleiseinrichtung nach Anspruch 1, dadurch gekennzeichnet, dass jeder Anschlag (54) so ausgebildet ist, um ein Fahrzeug (8) im Wirkungsbereich des zugeordneten Fahrzeugfühlers (62) zu halten und dass der Anschlag und der Unterbrecher (84) unter der Wirkung eines Rückstellgliedes (82) stehen.

4. Gleiseinrichtung nach Anspruch 3, dadurch gekennzeichnet, dass der Anschlag (54) als Vertiefung an einem am Gleisstrang schwenkbar gelagerten Hebel (60) ausgebildet ist.

5. Gleiseinrichtung nach Anspruch 1 oder 2, dadurch gekennzeichnet, dass der Fahrzeugfühler (62) unter der Einwirkung einer Feder (82) in einer in das Profil der Laufräder (18) der Fahrzeuge (8) ragenden Lage gehalten ist.

6. Gleiseinrichtung nach Anspruch 2 oder 5, dadurch gekennzeichnet, dass das Betätigungsglied (68) einen mit dem Lenker (66) verbundenen Hebel (72) aufweist, der über eine Rolle (74) an einer Leitfläche (76) des den Anschlag (54) aufweisenden Hebels (60) angreift.

7. Gleiseinrichtung nach Anspruch 4, dadurch gekennzeichnet, dass die Fahrzeuge (8) Mitnahmeklinken (98) aufweisen und die Unterbrecher (84) in der wirksamen Lage die Klinken ausser Eingriff mit den Mitnehmern (96) halten.

8. Gleiseinrichtung nach Anspruch 7, dadurch gekennzeichnet, dass der Unterbrecher (84) starr mit dem Anschlag (54) der zugeordneten Haltestelle (6) verbunden ist.

9. Verwendung der Gleiseinrichtung nach einem der vorangehenden Ansprüche als Staustrecke zwischen benachbarten Sektionen einer mehrere Sektionen aufweisenden Umlauf-Seilförderanlage.

## Claims

1. A track arrangement for the vehicles of a haulage system, particularly a circulating cable railway system with, supporting the vehicles (8) by their running gear (20) and having an intake side (26) and an outlet side (28), a track line (2) and associated with the track line a conveyor (4) which has drivers (96) intended to entrain in each case one vehicle in the direction of travel, characterised in that extending along the completely horizontally extending track line of the conveyors and over the entire length there are distributed abutments (54) each of which is provided for one vehicle and in that the abutments are adapted for movement between an effective position defining holding stations (6) and an ineffective position, each of the abutments having an actuating member (68) and in that for each holding station there is a vehicle sensor (62) and a circuit-breaker (84), the vehicle sensor of one holding station being, with reference to a holding station preceding it in the direction of travel, connected both to the actuating member and also with its circuit breaker and in that the circuit breaker is constructed to act on the entraining connection between one driver (96) of the conveyor and a vehicle.

2. A track arrangement according to claim 1, characterised in that each vehicle sensor (62) consists of, pivotally mounted on the track line (2), a lever (64) which is connected via a link member (66) to the actuating member (68) of the abutment (54) of the holding station (6) precedent in the direction of travel, and in that the vehicle sensor, the abutment and the circuit breaker (84) are subject to the action of a restoring member (82).

3. A track arrangement according to claim 1, characterised in that each abutment (54) is so constructed that it holds a vehicle (8) in the range of action of the associated vehicle sensor (62) and in that the abutment and the circuit breaker (84) are subject to the action of a restoring member (82).

4. A track arrangement according to claim 3, characterised in that the abutment (54) is constructed as a depression on a lever (60) pivotally mounted on the track line.

5. A track arrangement according to claim 1 or 2, characterised in that the vehicle sensor (62) is, under the action of a spring (82), held in a position which projects into the profile of the wheels (18) of the vehicles (8).

6. A track arrangement according to claim 2 or 5, characterised in that the actuating member (68) has, connected to the link member (66), a lever (72) which via a wheel (74) engages a guide surface (76) on the lever (60) which comprises the abutment (54).

7. A track arrangement according to claim 4, characterised in that the vehicles (8) have entraining detents (98) while the circuit breakers (84) in their operative position maintain the detents disengaged from the drivers (96).

8. A track arrangement according to claim 7, characterised in that the circuit breaker (84) is rigidly connected to the abutment (54) of the associated holding station (6).

9. Use of the track arrangement according to one of the preceding claims as a holding section between adjacent sections of a circulating cable railway system comprising a plurality of sections.

## Revendications

1. Dispositif de rails de garage pour les véhicules d'une installation de téléphérage en circuit fermé, muni d'une voie ferrée (2) supportant les véhicules (8) par leur mécanisme de roulement (20) et présentant un côté d'entrée (26) et un côté de sortie (28), et muni également d'un transporteur (4) affecté à la voie ferrée, qui présente des entraîneurs (96) destinés à entraîner chacun un véhicule dans le sens de la marche, caractérisé en ce que le transporteur longe la voie ferrée horizontale de bout en bout, sur toute la longueur de celle-ci et en ce que des butées (54) réparties sur la voie ferrée sont prévues pour un véhicule à chaque fois, butées qui sont mobiles entre une position active qui définit des stations (6) et une position inactive, chacune des butées possédant un organe de commande (68), en ce qu'un détecteur de véhicule (62) ainsi qu'un rupteur (84) sont prévus pour chaque station, le détecteur de véhicule d'une station étant relié à chaque fois, par rapport à une station précédente dans le sens de la marche, aussi bien à l'organe de commande qu'au rupteur de cette station et en ce que le rupteur est conçu de façon à agir sur la jonction d'entraînement entre un entraîneur (96) du transporteur et un véhicule.

2. Dispositif de rails de garage selon la revendication 1, caractérisé en ce que chaque détecteur de véhicule (62) est formé par un levier (64) fixé de façon orientable à la vole ferrée (2), levier qui est relié par l'intermédiaire d'un bras oscillant (66) à l'organe de commande (68) de la butée (54) de la station précédente (6) dans le sens du transport et en ce que le détecteur de véhicule, la butée et le rupteur (84) sont sous l'influence d'un organe de rappel (82).

3. Dispositif de rails de garage selon la revendication 1, caractérisé en ce que chaque butée (54) est conçue de façon à maintenir un véhicule (8) dans la zone d'action du détecteur de véhicule correspondant (62) et en ce que la butée et le capteur (84) sont sous l'influence d'un organe de rappel (82).

4. Dispositif de rails de garage selon la revendication 3, caractérisé en ce que la butée (54) est conçue en tant qu'évidement sur un levier (60) logé de façon orientable sur la voie ferrée.

5. Dispositif de rails de garage selon les revendications 1 ou 2, caractérisé en ce que le détecteur de véhicule (62) est maintenu, sous l'effet d'un ressort (82), dans une position faisant saillie dans le profil des roues porteuses (18) des véhicules (8).

6. Dispositif de rails de garage selon les revendications 2 ou 5, caractérisé en ce que l'organe de commande (68) présente un levier (72) relié au bras oscillant (66), levier qui agit par l'intermédiaire d'un rouleau (74) sur une surface conductrice (76) du levier (60) présentant la butée (54).

7. Dispositif de rails de garage selon la revendication 4, caractérisé en ce que les véhicules (8) présentent des cliquets d'entraînement (98) et en ce que les rupteurs (84) dans la position active maintiennent les cliquets hors du contact des entraîneurs (96).

8. Dispositif de rails de garage selon la revendication 7, caractérisé en ce que le rupteur (84) est relié de façon fixe à la butée (54) de la station correspondante (6).

9. Utilisation du dispositif de rails de garage selon l'une des revendications précédentes en tant que tronçon de retenue entre des sections voisines d'une installation de téléphérage en circuit fermé présentant plusieurs sections.

# Fig.1

Fig.3

Fig.2

EP 0 306 771 B1

Fig.4